# EUROPÄISCHE PATENTSCHRIFT

(11) **EP 0 460 718 B1**
(45) Veröffentlichungstag und Bekanntmachung des Hinweises auf die Patenterteilung: **01.03.1995**
(21) Anmeldenummer: 91114648.8
(22) Anmeldetag: 22.09.1987
(51) Int. Cl.: B32B 27/28, C08L 25/16, C08L 33/06

(54) **Gegenstände aus einem Polymer A, die mit einem mit Polymer A verträglichen Polymer B beschichtet sind**
Products comprising a polymer A which is coated with a polymer B which is compatible with polymer A
Produits comprenant un polymère A enduit d'un polymère B qui est compatible avec le polymère A

(30) Priorität: 24.09.1986 DE 3632370
(43) Veröffentlichungstag der Anmeldung: 11.12.1991
(62) Teilanmeldung aus: 87113795.6
(73) Patentinhaber: Röhm GmbH, 64293 Darmstadt (DE)
(72) Erfinder: Siol, Werner, Dr., W-6100 Darmstadt (DE); Terbrack, Ulrich, W-6107 Reinheim 2 (DE)

(56) Entgegenhaltungen:
- DE-A- 3 436 476
- US-A- 4 091 165

## Beschreibung

### Gegenstand der Erfindung

Die Erfindung betrifft Gegenstände, die gebildet werden aus einem Cyclohexyl(meth)acrylat als Monomeres enthaltenden Polymer als Mantel auf einem α-Methylstyrol als Monomeres enthaltenden Polymer.

### Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.

Völlig kompatible Mischungen von Polymeren zeigen völlige Löslichkeit (Mischbarkeit) in allen Mischungsverhältnissen. Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, Ed., III-211-213).

Neuere Ergebnisse über "Polymer Blends" und mögliche Anwendung derselben werden von L.M. Robeson in Polym. Engineering & Science 24 (8) 587 - 597 (1984) berichtet.

Von M.T. Shaw and R.H. Somani wird für PMMA eine Mischbarkeit von nur 3,4 ppm (PMMA mit einem Molekulargewicht von 160 000) bzw. 7,5 ppm (PMMA mit einem Molekulargewicht von 75 000) mit Polystyrol angegeben (Adv. Chem. Ser. 1984, 206 (Polymer Blends Compos. Multiphase Syst., 33 - 42), CA 101 : 73 417e). Ebensowenig sind andere Polymethacrylate und Polyacrylate mit Polystyrol zu transparenten Kunststoffen abmischbar.

Eigene Versuche zeigen, daß Poly- -methylstyrol mit Polymethylmethacrylat und Polyethylmethacrylat bei Raumtemperatur Verträglichkeit zeigt. Beim Erwärmen auf ca. 130 Grad C kommt es jedoch zur Entmischung. D.h. diese Polymermischungen zeigen LCST-Verhalten (LCST = Lower Critical Solution Temperature). Eine gewisse, geringe Verträglichkeit wird auch mit Polybutylmethacrylat gefunden. Hier liegt die LCST im untersuchten Mischungsbeispiel bei ca. 80 Grad C. Es deutet sich somit eine mit zunehmender Kettenlänge der Estergruppen geringer werdende Verträglichkeit an, ebenso wie sie auch bei den Polymermischungen: Copolymere aus α-Methylstyrol und Acrylnitril/Polymethacrylate beschrieben wurden [vgl. S.H. Goh et al. Polymer Engineering and Science, 22, 34 (1982)].

### Aufgabe und Lösung

Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt. (Vgl. Kirk-Othmer 3rd Ed. Vol. 18, pp 443 - 478 J. Wiley 1982) Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Dabei haben **multiphasische** Polymermischungen eine ungleich größere kommerzielle Bedeutung erlangt als verträgliche Mischungen (Vgl. Kirk-Othmer loc. cit. pg. 449). Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit dem Ziel, dadurch ein verbessertes Gesamt-Eigenschaftsspektrum zu erreichen, enge Grenzen. Dies schien auch für die beiden Polymerklassen der Polystyrole und der Polyalkyl(meth)acrylate zuzutreffen. [Vgl. W.A. Kruse et al. Makromol. Chem. 177, 1145 (1976) sowie R.H. Somani and M.T. Shaw. Macromolecules 14, 1549 - 54 (1981)]. Die vorliegende Erfindung beruht auf der Erkenntnis, daß überraschenderweise Mischungen aus Poly-α-methylstyrol und Polycyclohexylmethacrylat oder Polycyclohexylacrylat miteinander verträglich sind.

Die vorliegende Erfindung betrifft daher Gegenstände, die gebildet werden
A) Aus einem Poly-α-methylstyrol, das zu wenigstens 20 und bis zu 100 Gew.-% aus α-Methylstyrol und zu 80 bis 0 Gew.-% aus weiteren mit α-Methylstyrol copolymerisierbaren Comonomeren aufgebaut ist, (= Polymer A), das versehen ist mit einem Mantel eines Polymeren
B) das zu wenigstens 2 und bis zu 100 Gew.-% aus einem Monomeren der Formel I 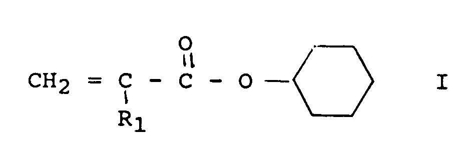 worin R₁ für Wasserstoff oder Methyl steht, und zu 98 - 0 Gew.-% aus weiteren mit den Monomeren der Formel I copolymerisierbaren Monomeren aufgebaut ist (=Polymer B) mit der Maßgabe, daß der Anteil an sehr polaren copolymerisierbaren Monomeren aus der Gruppe bestehend aus Acrylnitril, Maleinsäureimid, und -anhydrid, p-(2-Hydroxyhexafluoroisopropyl)-styrol und Allylalkohol im Polymer A) unter 10 Gew.-% liegt.

Die beiden Polymertypen sind infolge ihrer den Charakter bestimmenden Monomerbausteine hinreichend verschieden, so daß aus den Erfahrungen des Standes der Technik Inkompatibilität hätte erwartet werden müssen.
Nach vorliegenden Befunden ist die Verträglichkeit der aus A) und B) gebildeten Mischungen so gut, daß bei einer Temperatur von 200 Grad C und darüber keine Entmischung eintritt.
Besonders erwähnt sei die Ausführungsart mit Poly-α-methylstyrol als Polymerkomponente A) und Polycyclohexylacrylat und/oder Polycyclohexylmethacrylat als Polymer B). Die ausgezeichnete Verträglichkeit läßt eine weitgehende Variationsbreite zu, hinsichtlich der Partner. So ist es einerseits möglich, das Polymer B) durch Copolymerisation mit geeigneten Monomeren weitgehend zu variieren.

Andererseits läßt sich auch das Polymer A) in gewissem Rahmen durch Copolymerisation mit geeigneten Monomeren verändern, ohne daß die Verträglichkeit verloren geht. (Geeignete Comonomere lassen sich z.B. dem Kunststoff-Handbuch, Ed. R. Vieweg & G. Daumiller, Band V, Carl Hanser Verlag, München, 1969, pp. 104-108, entnehmen). Geeignete Comonomere für B) sind Acryl- bzw. Methacrylsäureester, im allgemeinen solche von nichtalicyclischen Alkoholen mit 1 - 12 Kohlenstoffatomen, insbesondere Alkanolen. Daneben Acryl- und Methacrylsäureester von gegebenenfalls substituierten cyclischen Alkoholen mit 4, 5, 7, 8, 9, 10, 11 oder 12 Kohlenstoffatomen im Ring sowie Acryl- und Methacrylsäureester von substituierten Cyclohexanolen, wobei als Substituenten vorzugsweise Alkylreste mit 1 bis 3 Kohlenstoffatomen verstanden seien.

Desweiteren kommen andere mit Cyclohexyl(meth)acrylat copolymerisierbare Monomere als Comonomere in Frage. So z.B. gegebenenfalls substituierte Styrole, in der Regel in Anteilen unter 50 Gew.-% und bevorzugt in Anteilen unter 20 Gew.-%. Besonders genannt als Comonomere für das Polymere B) sind von Cyclohexyl(meth)acrylat verschiedene Ester der (Meth)acrylsäure, insbesondere solche der Formel II 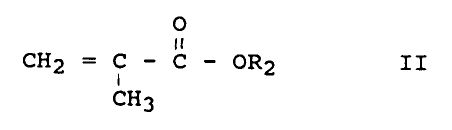
worin R₂ für Methyl, Ethyl, Propyl und n-Butyl steht, d.h. Methylmethacrylat, Ethylmethacrylat, Propylmethacrylat und n-Butylmethacrylat. Der Anteil dieser Monomeren am Polymer B) beträgt in einer bevorzugten Ausführungsform wenigstens 40 Gew.-%.

Weiter ist bevorzugt, daß der Anteil von Cyclohexylmethacrylat und/oder Cyclohexylacrylat am Polymeren B) wenigstens 5 Gew.-% ausmacht. Besonders bevorzugt ist ein Gehalt der Cyclohexylester von wenigstens 10 Gew.-% oder ganz besonders bevorzugt ein Gehalt von 20 - 80 Gew.-% am Polymer B).
Bevorzugt sind ferner solche Polymermischungen, die zu wenigstens 20 Gew.-% α-Methylstyrol und wenigstens 40 Gew.-% an Monomeren der Formel II im Polymer A) enthalten.

Bevorzugt sind solche Gegenstände, die als Polymer A) Copolymere enthalten, die zu wenigstens
1 Gew.-%, in der Regel 2 - 40 Gew.-% oder besser 3 - 20 Gew.-% eines Monomeren der Formel III enthalten. 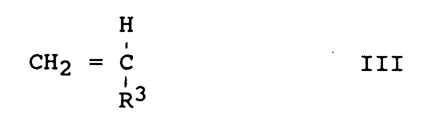
worin R³ für einen gegebenenfalls substituierten aromatischen Rest, vorzugsweise einen Phenylrest oder für eine Gruppe 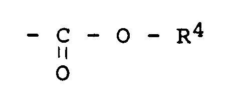
steht, wobei R⁴ für einen aliphatischen oder aromatischen Kohlenwasserstoffrest mit 1 - 18 Kohlenstoffatomen steht. Als Substituenten für aromatische Reste seien Alkylgruppen mit 1 bis 4 Kohlenstoffatomen, oder - weniger bevorzugt - Halogen wie Chlor genannt.

Insbesondere sind solche Gegenstände zu nennen, die als Polymer A) zu wenigstens 20 Gew.-% aus α-Methylstyrol und zusätzlich zu wenigstens 20 Gew.-% aus einem anderen, von α-Methylstyrol verschiedenen, gegebenenfalls substituierten Styrol aufgebaut sind. Als Styrole sind hier u.a. Styrol selbst, p- und m-Alkylstyrole zu nennen, wobei Alkyl vorzugsweise für einen Alkylrest mit 1 - 3 Kohlenstoffatomen steht. Ebenso kann das α-Methylstyrol durch Ester der Acrylsäure und der Methacrylsäure teilweise ersetzt werden. Bevorzugte Menge für Methacrylsäureester sind 10 - 80 Gew.-%, wenn die Methacrylsäureester der Formel II entsprechen 40 bis 80 Gew.-%. Ferner kann das α-Methylstyrol in untergeordneter Menge durch andere Vinylverbindungen,insbesondere Vinylester ersetzt werden. Dabei ist darauf zu achten, daß der α-Methylstyrolgehalt an Polymer A) wenigstens 20 Gew.-%, bevorzugt jedoch wenigstens 30 Gew.-%, besonders bevorzugt wenigstens 40 Gew.-% und ganz besonders bevorzugt wenigstens 55 Gew.-% ausmacht.

Während das Polymer A) mit anderen hydrophoben Vinylverbindungen also weitestgehend modifiziert werden kann, ist der Anteil an sehr polaren Monomeren, wie z.B. Acrylnitril, Maleinsäureanhydrid, Maleinsäureimiden, p-(2-Hydroxyhexafluorosiopropyl)styrol oder Allylalkohol sehr begrenzt. Der Anteil dieser polaren Monomeren soll definitionsgemäß unter 10 Gew.-%, besser unter 5 Gew.-% am Polystyrol A) betragen. Besonders bevorzugt sind solche Polymere A), die weniger als 0,1 Gew.-% dieser polaren Monomeren enthalten.

In der Regel ist eine Verträglichkeit der Polymeren A) mit den Polymeren B) auch dann noch gegeben, wenn auch das Polymere A) Cyclohexyl(methy)acrylat und/oder das Polymere B) auch α-Methylstyrol enthält. Dabei ist der α-Methylstyrolgehalt des Polymeren A) jedoch deutlich höher als der α-Methylstyrolgehalt des Polymeren B). In der Regel ist die Differenz des α-Methyl-styrolgehalts (Gew.-% α-Methylstyrol in Polymer A) minus Gew.-% -Methylstyrol in Polymer B) größer als 10 Gew.-%, bevorzugt größer als 20 Gew.-%, besonders bevorzugt größer als 30 Gew.-% und ganz besonders bevorzugt größer als 50 Gew.-%. Ebenso ist der Cyclohexyl(meth)acrylatgehalt der Polymeren B) deutlich höher als der Cyclohexyl(meth)acrylatgehalt des Polymeren A). So enthält Polymere A) in der Regel weniger als 2 Gew.-% Cyclohexyl(meth)acrylat, bevorzugt weniger als < 0,1 Gew.-%. Für den Fall, daß auch Polymer A) Cyclohexyl(meth)acrylat enthält, gilt, daß der Quotient (Gehalt an Cyclohexyl(meth)acrylat in Polymer B/Gehalt an Cyclohexl(meth)acrylat in Polymer A) > 2, bevorzugt > 5 und ganz besonders bevorzugt > 10 ist.

Ferner gilt, daß der Gehalt an Monomeren der Formel I im Polymer B) und der Gehalt an α-Methylstyrol im Polymeren B) vor allem dann gering sein kann, wenn die übrigen Monomerbausteine im Polymer A) und im Polymer B) chemisch weitgehend übereinstimmen.

### Herstellung der Polymerisate A) und B)

Die Herstellung der Polymerisate A) und B) kann nach den bekannten Regeln der Polymerisation und nach bekannten Verfahren erfolgen. Die Polymeren von Typ A) können z.B: nach Houben-Weyl, Methoden der Organischen Chemie, 4. Auflage, Bd. XIV/1, Georg Thieme-Verlag (1961) hergestellt werden. Sie sind auch in geeigneter Form im Handel erhältlich. Dabei kann vorzugsweise das radikalische, aber auch ionische Polymerisationsverfahren zur Anwendung kommen. Die Molgewichte M der erfindungsgemäß eingesetzten Polymeren A) liegen in der Regel oberhalb von 3 000, bevorzugt im Bereich 5 000 - 1000 000, besonders bevorzugt im Bereich 20 000 - 500 000. (Bestimmung durch Lichtstreuung).

Für die gute Verträglichkeit von Polymer A) und Polymer B) ist die Taktizität der Polymeren von gewisser Bedeutung. In der Regel ist insbesondere ein Polymer B) mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.

Die Herstellung der Homo- bzw. Copolymerisate B) erfolgt nach bekannten Verfahren. Wenn auch prinzipiell eine Herstellung durch anionische Polymerisation oder Group.-Transfer-Polymerisation (Siehe auch O.W. Webster et al., J. Am. Chem. Soc. 105, 5706 (1983) möglich ist, so ist doch die bevorzugte Herstellungsform die radikalische Polymerisation.

Die Molgewichte M der Polymerisate B) liegen in der Regel oberhalb von 3 000 im allgemeinen Bereich von 10 000 bis 1 000 000, vorzugsweise 20 000 bis 300 000. Bei der Auswahl der Monomerkomponenten die als Comonomere bei B) eingesetzt werden sollen, ist darauf zu achten, daß die Glastemperatur Tg des resultierenden Polymerisats die technische Anwendbarkeit nicht einschränkend beeinflußt.

Im folgenden wird "Poly-α-methylstyrol" bzw. "Polycyclohexyl(meth)acrylat" jeweils stellvertretend für die unter die Polymeren A) bzw. B) fallenden Möglichkeiten aufgeführt.

### Vorteilhafte Wirkungen

1) Durch Umhüllen von Poly-α-methylstyrol mit Polycyclohexyl(meth)acrylate ist die Herstellung einer optischen Gradientenfaser möglich: Dabei erhält man folgende Daten:
   - Kern :: Poly-α-methylstyrol Brechungsindex n_{D} = 1,61
   - Mantel :: Polycylohexyl(meth)acrylat n_{D} = 1,51 In der Regel wird man als Mantel - schon wegen der hohen Sprödigkeit vom Polycyclohexylmethacrylat Cyclohexyl(meth)acrylat-haltige Copolymere (z.B. mit MMA) verwenden, wodurch der Brechungsindex des Mantels noch niedriger wird.
   - Übergang:: Kontinuierlich. Diese Zone entspricht einer Polymermischung PM. Der Kern gehorcht der Definition von A), der Mantel entspricht der Definition von B).
   Derartige Fasern können z.B. als Lichtleitkabel Verwendung finden.
2) Gegenstände aus Poly-α-methylstyrol mit einem dünnen Mantel aus Polycyclohexyl(meth)acrylat, insbesondere aus einem Polycyclohexyl(meth)acrylat mit (einpolymerisiertem) UV-Absorber sind zugänglich. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel werden die Gegenstände aus Poly-α-methylstyrol durch Spritzen, Pressen, Extrudieren, Walzen oder Gießen hergestellt. Der Mantel aus Polymer B) wird in der Regel durch Lackieren oder durch Coextrudieren aufgebracht. Hier ist insbesondere an solche Gegenstände zu denken, die eine hohe Wärmeformbeständigkeit verbunden mit einer guten Witterungsbeständigkeit erfordern, z.B. Scheinwerferstreuscheiben.
   In all den vorgenannten Objekten soll die Deckschicht vorzugsweise 0,1 bis 20 Gew.-% (bezogen auf die Deckschicht) mindestens eines UV-Absorbers in zweckmäßiger Verteilung enthalten. Brauchbare UV-Absorber werden z.B. in Kirk-Othmer, Encyclopedia of Chemical Technology , 3rd Ed. Vol. 23, pp. 615-627, J. Wiley, 1983; R. Gächter u. H. Müller, Taschenbuch der Kunststoff-Additive, Carl Hanser Verlag, 1979, Seiten 90-143; Ullmanns Encyklopädie der Techn.Chemie, 4. Auflage, Bd. 15, Seiten 256-260, Verlag Chemie, 1978, US-A 4 576 170, angegeben.
3) Platten aus Poly-α-methylstyrol mit einem Überzug aus Polycyclohexyl(meth)acrylat lassen sich herstellen. Platten mit einem derartigen Aufbau weisen gegenüber unbehandelten Poly-α-methylstyrolplatten eine um ca 2% verbesserte Lichtdurchlässigkeit auf. In der Regel weisen Platten mit einem Überzug aus Polycyclohexyl(meth)acrylat auch eine bessere Kratzfestigkeit und eine veränderte Korrosionsbeständigkeit auf.

### BEISPIEL

### Beispiel 1

Eines der interessantesten erfindungsgemäßen Anwendungsgebiete wird der Oberflächenschutz von Polystyrol beispielsweise durch Lackieren mit Polymer B) sein.
Gerade hier sind minimale Polymermengen B), beispielsweise 0,5 Gew.-% bezogen auf Polymer A) ausreichend, so daß bei der Wiedereinarbeitung nur sehr geringe Mengen von Polymer A) eingearbeitet werden müssen.

In der Regel wird man auch als Polymer A) nicht reines Poly-α-methylstyrol einsetzen, da dies im allgemeinen ohne Copolymerisation mit anderen Monomeren nicht thermostabil ist.

## Patentansprüche

1. Gegenstände, die gebildet werden aus einem Polymeren
A) das zu wenigstens 20 und bis zu 100 Gew.-% aus dem Monomeren α-Methylstyrol und zu 80 bis 0 Gew.-% aus weiteren, mit α-Methylstyrol copolymerisierbaren Monomeren aufgebaut ist, und das versehen ist mit einem Mantel eines Polymeren
B) das zu wenigstens 2 und bis zu 100 Gew.-% aus einem Monomeren der Formel I 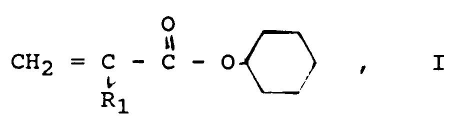 worin R₁ für Wasserstoff oder Methyl steht, und zu 98 bis 0 Gew.-% aus weiteren, mit den Monomeren der Formel I copolymerisierbaren Monomeren, aufgebaut ist mit der Maßgebe, daß der Anteil an sehr polaren copolymerisierbaren Monomeren aus der Gruppe bestehend aus Acrylnitril, Maleinsäureimid und -anhydrid, p-(2-Hydroxyhexafluoroisopropyl)-styrol und Allylalkohol im Polymeren A) unter 10 Gew.-% liegt.

2. Gegenstände gemäß Anspruch 1, dadurch gekennzeichnet, daß der Mantel aus dem Polymeren B) 0,1 - 20 Gew.-% bezogen auf B) mindestens eines UV-Absorbers enthält.

3. Verfahren zur Herstellung von Gegenständen gemaß den Ansprüchen 1 und 2, dadurch gekennzeichnet, daß man ein Polymer A) mit einem Mantel aus einem Polymer B) versieht.

## Claims

1. Articles prepared from a polymer
A) which is synthesized, in an amount of at least 20 and up to 100 weight %, from the monomer α-methylstyrene and, in an amount of 80 to 0 weight %, from further monomers copolymerisable with α-methylstyrene, and which is provided with a covering of a polymer
B) which is synthesized, in an amount of at least 2 and up to 100 weight %, from a monomer of formula I 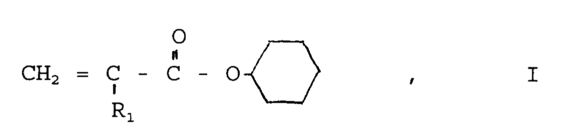 wherein R₁ represents hydrogen or methyl, and, in an amount of 98 to 0 weight %, from further monomers copolymerisable with the monomers of formula I with the proviso that the amount of highly polar copolymerisable monomers from the group consisting of acrylonitrile, maleic acid imide and anhydride, p-(2-hydroxyhexafluoroisopropyl)-styrene and allylalcohol contained in the polymer A) is below 10 weight %.

2. Articles according to claim 1, characterised in that the covering of polymer B) contains at least one ultraviolet absorber, in an amount of 0.1 - 20 weight % based on B).

3. A process for preparing articles according to claims 1 and 2, characterised in that a polymer A) is provided with a covering made of a polymer B).

## Revendications

1. Articles qui sont formés en un polymère
A) qui est constitué, pour au moins 20% et jusqu'à 100% en poids, par le monomère α-méthylstyrène et, pour 80 à 0% en poids, par d'autres monomères copolymérisables avec l'α-méthylstyrène, et qui est garni d'une enveloppe en un polymère
B) qui est constitué, pour au moins 2% et jusqu'à 100% en poids, par un monomère de formule I 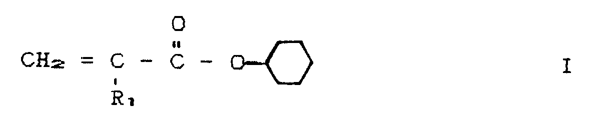 dans laquelle R₁ est mis pour un atome d'hydrogène ou un groupement méthyle et, pour 98 a 0% en poids, par d'autres monomères copolymérisables avec le monomère de formule I, étant spécifié que la part de monomères copolymérisables très polaires, du groupe comprenant l'acrylonitrile, le maléimide et l'anhydride maléique, le p-(2-hydroxyhexafluoro-isopropyl)styrène et l'alcool allylique, dans le polymère A) se situe au-dessous de 10% en poids.

2. Articles selon la revendication 1, caractérisés en ce que l'enveloppe en polymère B) contient 0,1 à 20% en poids, par rapport à B), d'au moins une substance absorbant les ultraviolets.

3. Procédé de fabrication d'articles selon les revendications 1 et 2, caractérisé en ce qu'on garnit un polymère A) d'une enveloppe en un polymère B).
